Europäisches Patentamt

European Patent Office

Office européen des brevets

(19)

(11) **EP 1 162 252 A1**

(12) **EUROPEAN PATENT APPLICATION**

(43) Date of publication:
**12.12.2001 Bulletin 2001/50**

(51) Int Cl.$^7$: **C10G 35/16**, B01J 19/08

(21) Application number: **00810498.6**

(22) Date of filing: **08.06.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **ABB RESEARCH LTD.
8050 Zürich (CH)**

(72) Inventors:
  • **Eliasson, Baldur, Dr.
    5413 Birmenstorf (CH)**

  • **Zhang, Kui, Dr.
    Tianjin 30072 (CN)**
  • **Kogelschatz, Ulrich
    5212 Hausen (CH)**

(74) Representative: **ABB Patent Attorneys
c/o ABB Business Services Ltd,
Intellectual Property (SLE-I),
Haselstrasse 16/699
5401 Baden (CH)**

(54) **Method of upgrading liquid hydrocarbons**

(57)    A method of upgrading a mixture of normally liquid hydrocarbons having a normal boiling range up to about 180°C into a high octane normally liquid fuel; the method comprising the steps of feeding a composition containing the mixture of normally liquid hydrocarbons into a reactor including a first electrode means, a second electrode means and at least one layer of a normally solid dielectric material positioned between the first and the second electrode means; submitting the composition within the reactor in the presence of a normally solid catalyst to a dielectric barrier discharge, wherein the normally solid catalyst is a member selected from the group of zeolites, modified zeolites and zeolite-like materials; and controlling the dielectric barrier discharge to convert the composition into a product stream containing the high octane normally liquid fuel.

FIG. 1

EP 1 162 252 A1

**Description**

Background of the Invention

The present invention relates to a method of upgrading a mixture of normally liquid hydrocarbons having a normal boiling range up to about 180°C into a high octane normally liquid fuel.

The petroleum refining industry is being faced with more stringent specifications for the transportation fuels posing challenges to all refinery processes. In particular, the development of alternate processes for manufacturing high octane gasoline in view of the requirement to eliminate lead additives as octane enhancers represents a major technical challenge. Furthermore, the man-made emissions of greenhouse gases such as carbon dioxide, which are suspected of being at least partially responsible for the global warming of the atmosphere, represents another major problem facing mankind.

Prior Art

Petroleum refining is a major industry in modern society which processes world-wide some 80 million barrels of crude oil per day. As a basic principle, crude oil is first separated into various fractions by a primary distillation. After the first most volatile fraction, i.e. the normally gaseous hydrocarbons containing up to 4 carbon atoms, naphtha represents the second fraction of the simple distillation serving as the raw material for gasoline. Naphtha comprises a combination of light naphtha, or straight run gasoline, containing mainly C5-, and C6-hydrocarbons, and heavy naphtha containing mainly C7- to C10-hydrocarbons and distills generally in a temperature range between 30°C and 180°C. Naphtha is predominantly comprised of aliphatic, mainly *n*-alkanes, and cycloaliphatic normally liquid hydrocarbons. In particular, the straight-chain hydrocarbons, i.e. the *n*-alkanes, resist oxidation much more than branched-chain hydrocarbons. Consequently, straight-chain alkanes have poor ignition characteristics and a low octane number of about 60. They are of little use in gasoline for modern high compression ratio automobile engines, and their properties are even worse if the gasoline is unleaded. Therefore, it is a major objective for the oil refining industry to raise the quality of gasoline, i.e. in particular the octane number.

Petrol chemists have developed several methods to improve the quality of gasoline, most of which either modify a petroleum fraction such as naphtha or a sub-fraction thereof or provide the raw material for another reaction that will give compounds with an improved octane number. With this respect, the methods known as catalytic cracking, catalytic reforming or the isomerization are of particular interest. Most of these methods use thermal and/or catalytic activation for the transformation as described e.g. in EP 0 131 975. However, none of these reactions can satisfy fully the octane needs of most refineries since the specification on fuel becomes even more strict. Thus, high octane components for gasoline such as MTBE, i.e. methyl *tert*-butyl ether, or TAME, i.e. tert-amyl methyl ether, are generally needed. Thus, there is still a need for economic and effective methods of upgrading mixtures of normally liquid hydrocarbons such as naphtha leading to liquid fuel particularly containing oxygenates and, thus, having a high octane number.

Non-equilibrium plasma chemical processes occurring in the volume part of electrical non-equilibrium discharges have attracted a great deal of interest. Particularly, silent gas discharges have demonstrated their suitability for large-scale industrial applications, such as the generation of ozone. A characteristic of the silent discharge is the presence of a dielectric. Therefore silent gas discharges are also referred to as dielectric barrier discharges.

Recently, the utilization of greenhouse gases for the synthesis of methanol or methane in such silent gas discharge reactors has also been described. Thus, DE 42 20 865 describes a method and an apparatus for the hydrogenation of carbon dioxide leading in particular to methane or methanol by exposing a mixture of carbon dioxide and a substance containing hydrogen atoms, preferably hydrogen or water, to a dielectric barrier discharge. In the pending European Patent application No. 99810261 filed by the present assignee the synthesis of liquid hydrocarbons is disclosed, wherein a mixture of carbon dioxide and methane is exposed to a dielectric barrier discharge in the presence of a normally solid catalyst.

Objects of the Invention

Accordingly, it is an object of the present invention to provide for a method of upgrading a mixture of normally liquid hydrocarbons having a normal boiling range up to about 180°C such as light and heavy naphtha from crude oil distillation into a high octane normally liquid fuel.

Furthermore, it is an object of the present invention to provide for a method of upgrading a mixture of normally liquid hydrocarbons having a normal boiling range up to about 180°C into a high octane normally liquid fuel, which methods minimizes or even avoids the disadvantages of the prior art.

Moreover, it is an object of the present invention to provide for a method of upgrading a mixture of normally liquid hydrocarbons having a normal boiling range up to about 180°C into a high octane normally liquid fuel, which method can be carried out at low pressures, and preferably at low temperatures.

It is another object of the present invention to provide for a method of producing a normally liquid fuel capable of being used as gasoline and being of high quality and having a high octane number.

It is a further object of the present invention to provide for a method of upgrading a mixture of normally liquid hydrocarbons having a normal boiling range up to about 180°C into a high octane normally liquid fuel, which method contributes to the recycling of carbon dioxide and, thus, to reduction of the emissions thereof to the atmosphere.

Further objects and advantages of the present invention will become apparent as this specification proceeds.

Brief Summary of the Invention

We have found that the objects can be achieved according to a first general embodiment of the invention by a method as set forth in claim 1. Accordingly, the invention provides for a method of upgrading a mixture of normally liquid hydrocarbons having a normal boiling range up to about 180°C into a high octane normally liquid fuel; the method comprising the steps of feeding a composition containing the mixture of normally liquid hydrocarbons into a reactor including a first electrode means, a second electrode means and at least one layer of a normally solid dielectric material positioned between the first and the second electrode means; submitting the composition within the reactor in the presence of a normally solid catalyst to a dielectric barrier discharge, wherein the normally solid catalyst is a member selected from the group of zeolites, modified zeolites and zeolite-like materials; and controlling the dielectric barrier discharge to convert the composition into a product stream containing the high octane normally liquid fuel.

Definitions, Detailed Description of Preferred Embodiments and Elements of the Invention

The term "about" as used herein before any numeral implies a variation of typically ± 10%.

The term "normal" with regard to boiling points, boiling ranges and the like indicates that these values are understood as being corrected for "normal conditions", i.e. a temperature of 25°C and an atmospheric pressure of 1013 mbar. In analogy, the term "normal" with respect to physical states of matter and the like indicates that they are referred to said "normal conditions".

The term "layer" is used herein to refer to any planar or curved stratum having a width dimension that is substantially larger than its thickness dimension; typically, the width:thickness ratio is at least 10:1 and generally well above that value.

In the context of the present invention the term "hydrocarbons" stands for substances consisting of hydrogen and carbon atoms, such as aliphatic hydrocarbons being either saturated, such as alkanes, or unsaturated, such as alkenes and alkynes, cycloaliphatic hydrocarbons being either saturated or unsaturated, and/or aromatic hydrocarbons. The abbreviations such as "C5-hydrocarbons" or "C11-hydrocarbons" as used herein stands for hydrocarbons having the corresponding number of carbon atoms within their skeleton, i.e. five and eleven carbon atoms respectively. It is to be noted that the invention relates to any of the possible isomers and mixtures thereof.

The term "high octane normally liquid fuel" as used herein refers to a fuel consisting essentially of normally liquid hydrocarbons, preferably having a normal boiling range up to about 180°C, wherein "consisting essentially of" implies that said fuel contains at least about 75% by molar concentration of normally liquid hydrocarbons, preferably at least 80% by molar concentration, and more preferably at least 85% by molar concentration. Aside from branched hydrocarbons and aromatics, the high octane normally liquid fuel according to the invention generally contains oxygenates, and thus, having a high octane number. The addition of "high octane" to the term "normally liquid fuel" implies that the inventive method leads to a high quality fuel having, in general, a higher octane number than the starting material, i.e. the mixture of normally liquid hydrocarbons.

Sources of a mixture of normally liquid hydrocarbons being used in the inventive method are, in particular, naphtha derived from direct fractionation of crude oil. However, any mixture of normally liquid hydrocarbons having a boiling range up to about 180°C, e.g. stemming from various refinery conversion processes such as fluidized catalytic cracking (FCC) or hydrocracking can be used for the present invention. Moreover, any waste and exhaust material deriving from industrial processes containing a mixture of normally liquid hydrocarbons having a boiling range up to about 180°C, can also be used for the present invention. It is obvious, however, that purification steps prior to the feeding into the reactor might be necessary to remove other species present in trace amounts in the normally liquid hydrocarbons and compositions, respectively, such as desulfurization.

In a very preferred embodiment of the present invention, the composition further contains carbon dioxide. If the aforementioned liquid mixtures used for the present invention do not already contain carbon dioxide, the latter is co-fed into the reactor in accordance with the present invention. This is in particular beneficial for the conversion and/or conversion rate of the dielectric barrier discharge reaction according to the invention.

In a further preferred embodiment of the present invention the normally liquid hydrocarbons and the carbon dioxide are contained in the normally liquid composition at a molar ratio of carbon dioxide:mixture of normally liquid hydrocarbons of between about 1:1 to about 1:4, preferably between about 1:2 to about 1:3.

Preferably, the inventive method comprises the additional step of feeding at least one normally gaseous coreactant into the reactor, wherein the normally gaseous coreactant is selected from the group comprising, in particular, oxygen and air, as well as helium, argon, water steam and carbon monoxide.

According to a further preferred embodiment of the present invention the method comprises the additional step of preheating at least the mixture of normally liquid hydrocarbons prior to its feeding to a temperature of up to about 180°C.

The normally solid catalyst is a "shape-selective catalyst" being selected from the group of zeolites, modified zeolites and zeolites-like materials and thus having an at least partially crystalline, typically completely crystalline, solid structure. The term "shape-selective catalyst" is intended to refer to a catalyst that owns a special structure containing channels and pores, respectively, to limit the diffusion of the reacting molecules and the formed product molecules through its framework. Only molecules with diameters smaller than the openings and apertures, respectively, of the channels can pass through the shape-selective catalyst. Moreover, an additional constraint is imposed by the size and shape of the apertures and channels with respect to possible transition states of the reaction.

Zeolites are crystalline aluminosilicates of group IA and group IIA elements such as sodium, potassium, magnesium and calcium with the empirical formula (I)

$$M_{2/n}O \cdot (1-y)Al_2O_3 \cdot ySiO_2 \cdot wH_2O \qquad (I)$$

wherein

    n is the valence of the cation M,
    y the molar fraction of $SiO_2$ in the zeolite framework, and
    w number of water molecules present in the zeolite.

Zeolite structures are based on a three-dimensional framework of $AlO_4$ and $SiO_4$ tetrahedra (Si and Al defined as T atoms) which are interlinked through common oxygen atoms forming O-T-O-T-O bonds to give said three dimensional network through which channels run. Each $AlO_4$ tetrahedron in the framework bears a net negative charge which is compensated by a cation of the aforementioned group IA and group IIA elements. This cation is mobile and can be exchanged by other cations. In the interior of the channels are water molecules and the mentioned mobile cations. Criteria to distinguish zeolites and zeolites structures, respectively, are, inter alia, the number of either T- or O-atoms forming the rings and openings, respectively, controlling diffusion through the channels as well as the molar ratio of $SiO_2/Al_2O_3$, in short the Si/Al ratio.

"Modified zeolites" as used herein refers to natural or synthetic zeolites which have been modified by either cation or ion exchange, thermal treatment, hydrothermal treatment, treatment with inorganic or organic acids, treatment with inorganic or organic F materials, i.e. inorganic or organic compounds containing fluor or fluoride, as well as with organic silica materials, and, in particular, by an isomorphic substitution of the T atoms. Such an isomorphic substitution of the T atoms, e.g. leading to silicoalumino-phosphates, can be effected particularly by changing the parameters of the zeolite syntheses or by "post synthesis" modifications. Thus, various T atoms can be introduced into a zeolite framework during the synthesis step, such as Ga, Ge, Li, Be, B, Mg, Ti, Mn, Fe, Co, In, As and H. Such an introduction of a certain element and its concentration in a zeolitic framework usually occurs by mixing the different components in the synthesis gel. However, any other procedure for the introduction of the mentioned and other elements leading to modified zeolites are within the scope of the present invention. Moreover, the preparation method by simply mixing the different components as well as other procedures for the synthesis of modified zeolites are known by the person skilled in the art and need no further explanation herein. In analogy, "post synthesis" modifications of zeolites, i.e. modifications of existing natural or synthetic zeolites to effect a T-site substitution are also within the knowledge of the artisan and do not need to be further explained herein. Thus, various gaseous and liquid reactants as well as different techniques, such as hydrothermal techniques, have been developed for such a post synthesis T-site substitution. In particular, numerous reactants and techniques have been described for aluminium removal with simultaneous substitution by other elements such as Si, Ti, V, Fe, Sn, Ge and P.

"Zeolite-like materials" as used herein refers to normally solid materials, such as aluminophosphates, silicoaluminophosphates, metalloaluminophosphates and metal oxides containing OH groups, which have solid structures similar to zeolites and, therefore, which contain channels with sizes and shapes similar to channel sizes and shapes in zeolite structures. In particular, "zeolite-like materials" refer to crystalline solids which have zeolite-like structures as indicated by their incorporation in the "Atlas of Zeolite Structure Types" reported by Meier and Olson in "Atlas of Zeolites Structure Types", Zeolites 17(1996), 1-230 (report being incorporated herein for all purposes by way of reference). Examples of those isotypic and homeotypic species having zeolite-like structures are reported, in particular, in Table 3 on page 14 of the aforementioned reference.

In another preferred embodiment of the present invention the normally solid catalyst has an at least partially crystalline solid structure with at least one 10-ring channel or with at least one 12-ring channel within its structure. The use of such a zeolite, modified zeolite or zeolite-like material as catalyst in the inventive method, limits the growth of the hydrocarbon chain and thus inhibits the undesired formation of solid polymer. Consequently, an increased production and yield, respectively, of liquid fuel, in particular of normally liquid hydrocarbons, results. Moreover, the application of shape-selective catalysts for the inventive method leads to a large amount of branched hydrocarbons, in particular branched normally liquid hydrocarbons, representing a higher-quality fuel due to a higher octane number.

Typical and preferred materials having a solid structure in accordance with the present invention, and thus having at least one 10-membered ring channel system or at least one 12-membered ring channel system within the structure, are given in the following by way of their structure type codes consisting of three capital letters. These structure type codes have been set up by the IUPAC Commission on Zeolite Nomenclature and are, inter alia, listed together with their basic structural features and specific examples of zeolites, modified zeolites and zeolite-like materials in the above-mentioned "Atlas of Zeolite Structure Types" reported by Meier and Olson in Zeolites 17(1996), 1-230. Thus, typical normally solid catalysts in accordance with the present invention are of the structure type AEL, AFI, AFO, AFR, AHT, BEA, FER, LAU, LTL, MEI, MEL, MFI, MFS, MOR, MTT, STI, ZSM-12 and ZSM-18.

In a further preferred embodiment of the present invention, the at least one 10-ring channel has a diameter of between about 4 Å and about 7 Å, or the at least one 12-ring channel has a diameter of between about 4 Å and about 8 Å. Such a well-defined pore system further increases the shape-selectivity of the normally solid catalyst since the pores and channels, respectively, must be capable to accommodate the reactants, i.e. the normally gaseous composition, and in particular carbon dioxide and the normally gaseous hydrocarbons or fragments thereof. Moreover, an additional constraint is imposed by the pores and apertures of the channels which control the size and shape of the product molecules. Therefore, the preferred diameter of the at least one 10-ring channel between about 4 Å and about 7 Å or of the at least one 12-ring channel between about 4 Å and about 8 Å in accordance with the invention, leads to a precisely defined arrangement of $AlO_4$ and $SiO_4$ tetrahedra and thus to a shape-selective dielectric barrier discharge reaction with good reproducibility.

In a further preferred embodiment of the present invention the solid structure of the normally solid catalyst have at least two channel systems, wherein at least one channel system is a 10-ring channel or a 12-ring channel. Typically these at least two channel systems are interconnected, wherein, however, the channel intersections are free of super cages and β-cages, respectively, as well as free of α-cages. These super cages and α-cages interconnecting the different channels have diameters which are larger than those of the channels and the apertures of the channels, respectively. Therefore, the preferred embodiment of the invention, in which the solid structure of the normally solid catalyst is free of super cages further increases the shape-selectivity of the transformation by further defining the catalyst.

In accordance with the present invention, the normally solid catalyst has preferably a Si/Al ratio of higher than 6, more preferably higher than 15. As indicated, the Si/Al ratio is a criterion to distinguish different zeolites, modified zeolites and zeolite-like materials. Moreover, the Si/Al ratio strongly influences important properties of the inventive solid catalyst. Thus, the preferred Si/Al ratio indicated above leads to higher thermal and higher hydrothermal stability of the inventive solid catalyst. This is of particular benefit with respect to the regeneration of the normally solid catalyst since water might be formed during the regeneration process of the catalyst and as a by-product in the inventive dielectric barrier discharge reaction as well as small amounts of carbon deposits and/or polymeric material and hydrocarbons having a carbon chain built by 11 or more carbon atoms, respectively.

The increased hydrothermal stability of the aforementioned preferred embodiments of the present invention thus minimizes and/or avoids damages to the solid catalyst under the reaction conditions caused by the eventual formation of water. Moreover, the preferred Si/Al ratio particularly contributes to the increase of the structure destructive temperature of the inventive normally solid catalysts allowing a standard regeneration taking place at about 600°C. Thus, high silica Zeolite catalysts such as HZSM-5 are thermally stable up to 1000°C.

Preferred normally solid catalysts used in the present invention are a member of the group selected from zeolites and modified zeolites having a crystalline solid structure selected from BEA, FER, MEL, MFI, MOR, MTT and ZSM-12 as specified and defined in the above-mentioned "Atlas of Zeolite Structure Types" reported by Meier and Olson in Zeolites 17(1996), 1-230. Typical examples of those preferred catalysts are the so-called pentasil-type zeolites, such as Ferrierite and ZSM series catalysts, e.g. ZSM-5, ZSM-23, ZSM-20 and ZSM-11, and the corresponding modified zeolites as defined above.

In particular the use of ZSM-5 zeolites, and here preferably the NaZSM-5 and more preferably the HZSM-5, is highly preferred as the normally solid catalyst for the present invention. The shape-selective Zeolite ZSM-5 is a synthetic high-silica zeolite with a high thermal stability. The MFI-type topology shows a three-dimensional 10-member ring channel system having no super cages in its structure.

The use of a ZSM series zeolite catalyst for the inventive method leads to a product stream containing a high octane normally liquid fuel, as well as syngas, and minor amounts of higher hydrocarbons, i.e. having a carbon chain of at least 11 carbon atoms (C>11), and/or polymeric material. The products formed in the reaction over ZSM series catalysts, in particular, contain a large amount of branched hydrocarbons having a carbon chain of 5 to 10 carbon atoms improving the octane value and, thus, the quality of gasoline and liquid fuel, respectively. Beneficial for the former is, moreover, the formation of some normally liquid aromatics and oxygenates in the inventive method. The formation of polymer materials and higher hydrocarbons (>C11) is strongly restricted over ZSM catalysts because of their special pore structures and catalytic properties.

The use of zeolite-like materials and, in particular, the use of zeolites and modified zeolites as the normally solid catalyst offers, moreover, the advantage of having high concentrations of OH groups on the surfaces, i.e. on the outer surfaces of the zeolite structure as well as within the zeolite cavities and channels, respectively. In addition to the high concentration of OH groups on zeolite surfaces, an important characteristic of zeolites is the natural coulombic field formed within the zeolite framework. Within this context, it should be noted that both the concentration of OH groups and the strength of the natural coulombic field are controllable and adjustable. Generally, these two features allow the zeolites to easily respond to an external electric field, i. e. the zeolite becomes electrically charged more easily. The control of the dielectric barrier discharge according to the invention allows though to control these charges and electrostatic fields and, therefore, to control zeolite activity and selectivity in the conversion of a normally gaseous composition into a product stream containing at least a normally liquid hydrocarbon.

The use of zeolite-like materials, and in particular zeolites and modified zeolites, as the normally solid catalyst mainly inhibits the formation of carbon black, in particular, the precipitation of carbon black on the surface of the dielectric material, thus, allowing a long term operation of the dielectric-barrier discharge reactor. Moreover, the use of aforementioned catalysts for the inventive method limits the growth of the hydrocarbon chain. Consequently, an increased yield of normally liquid hydrocarbons having a normal boiling range of between about 30°C and about 180°C results and the formation of higher hydrocarbons (C>11) and polymeric material are suppressed. Furthermore, applying shape-selective catalysts leads to an increased tendency to form branched hydrocarbons, in particularly, of normally liquid branched hydrocarbons representing a high-quality fuel.

A further advantage of zeolites is the possibility of a controlled incorporation of acid centers in the intracrystalline surface, e.g. during synthesis and/or by subsequent ion exchange reaction. Thus, at temperatures above 300°C, pentasils have acidities comparable to those of mineral acids. Preferably, the normally solid catalyst is an acid type zeolite catalyst, such as HZSM-5 with varying Si/Al ratio.

In a further preferred embodiment of the invention, the normally solid catalyst comprises at least one substance selected from the group of metal ions and group IA, IIa, IB, IIb and VIII elements of the periodic table. The latter mentioned elements, i.e. alkali, earth alkali elements as well as the elements of the zinc and the copper group and the iron groups of the periodic table can be present either in ionic or atomic form. Those normally solid catalysts are synthesized by procedures generally known to the man skilled in the art, such as any type of ion exchange reactions or impregnations, in case followed by subsequent thermal activation or reduction. Examples of those solid catalysts are the Fe-ZSM-5, Fe/H-ZSM-5, Mo/H-ZSM-5, and H-GaAlMFI. The use of bifunctional catalysts, in particular the introduction of an hydrogenation function in an acidic zeolite, such as the incorporation of $Pt^{2+}$ and $Pd^{2+}$ ions may further prevent or lower the formation of carbon deposits.

Preferably, the mixture of normally liquid hydrocarbons is naphtha from crude oil distillation or a fraction thereof.

Brief Description of the Drawing

For a better understanding of the nature and scope of the present invention - and not to limit the invention-preferred embodiments are described in more detail in the following by reference to the drawing, in which:

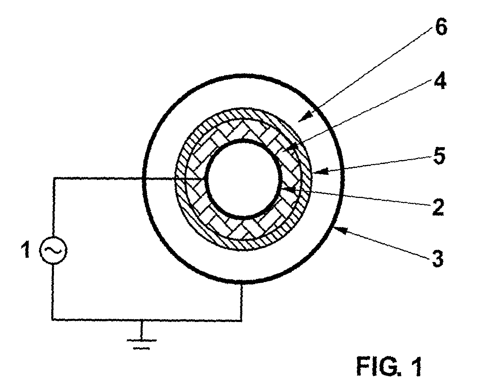

Fig. 1 is a diagrammatic cross sectional view of a preferred dielectric barrier discharge reactor configuration used for a preferred embodiment of the inventive method;

Detailed Description of the Drawing

The dielectric barrier discharge is a high pressure non-equilibrium discharge which occurs when alternating voltages are applied to a gas space between two electrodes separated by a non-conducting medium. The amplitude of the alternating high voltage has to be high enough to cause electrical breakdown in the gas space. Fig. 1 shows schematically a cross sectional view of a dielectric barrier discharge reactor according to the invention. The high voltage AC generator 1 is connected to the first electrode 2 and to the second grounded electrode 3 both having an essentially cylindrical form. The electrodes are generally made of corrosion-resistant metals or alloys or of materials covered by at least one layer of an electrically conducting substance. Electrode 2 forms an inner shell and electrode 3 forms an outer shell. The dielectric layer 4 is typically a glass, quartz or ceramic tube having a thickness of between about 0.1 mm and about 5 mm and covers the effective surface of electrode 2. The shape-selective catalyst 5 shown in Fig. 1, is also formed in essentially cylindrical form and is provided to cover the dielectric layer 4. Typically, the dielectric tube 4 serves as support for the solid catalyst 5. So, the solid catalyst 5, typically in powder form, is disposed in a piece of gas-permeable quartz fleece and wrapped around the outer surface of the dielectric tube 4, i.e. the surface of the dielectric tube 4 facing towards the electrode 3. Further catalyst support arrangements preferably used for the present dielectric barrier discharge reaction are described in EP-899'010 filed by the present assignee. It is obvious that the form and the size of the solid catalyst, i.e. whether it is applied in powder form or as grains of different sizes and the manner by which the catalyst is supported, i.e. by means of the dielectric material and by means of an additional support respectively, can be modified within the scope of the present invention.

In the preferred embodiment of the invention described, the composition containing the mixture of normally liquid hydrocarbons having a normal boiling range up to about 180°C and carbon dioxide is fed into the reactor in a gaseous state of matter. To this purpose, the mixture of normally liquid hydrocarbons is preheated up to about 180°C and combined with carbon dioxide prior to their feeding into the reactor. Since this procedure as well as further procedures for feeding a composition containing a gas such as carbon dioxide and a normally liquid mixture such as naphtha in a gaseous state of matter into a dielectric barrier reactor are known to the person skilled in the art, they need not to be explained in detail herein and all known procedures are, thus, within the scope of the present invention and can be used for performing the inventive method as well as its preferred embodiments.

The composition being in a gaseous state of matter passes in the axial direction through the essentially annular discharge gap 6, where it is exposed to the dielectric barrier discharge. The dielectric barrier discharge is effected by an AC potential applied between the first electrode and the second electrode means. The preferred AC potential being in the range of from about 6 kV to about 100 kV and the frequency of the AC potential preferably being in the range of from about 50 Hz to about 1 MHz. Generally a specific electric power up to about 1-25 kW/m$^2$ of electrode area is fed into the discharge reactor by automatically adjusting the amplitude and frequency of the applied voltage. As indicated above, an operating pressure in the range of from about 0.01 bar to about 30 bar, preferably from about 0.1 bar to about 10 bar, at an operating temperature up to about 400°C is maintained in the reactor. The normally gaseous mixture is passed through said reactor preferably at a flow rate of from about 0.1 m$^3$ per hour and per m$^2$ of electrode area to about 10 m$^3$ per hour and per m$^2$ of electrode area.

When the amplitude of the applied AC electric field reaches a critical value, breakdown is initiated in the gas and a current flows from one electrode to the other. Once breakdown is initiated at any location within the discharge gap, charge accumulates on the dielectric leads to the formation of an opposite electric field. This opposite electric field reduces the external electric field within the gap and interrupts the current flow in a few nanoseconds to form short-lived microdischarges. The duration of the current pulse relates to pressure and properties of gases involved and the dielectrics applied.

A large number of such microdischarges will be generated when a sufficiently high AC voltage is applied. The principal advantages of dielectric barrier discharge are that non-equilibrium plasma conditions are established at about atmospheric pressure and that the entire electrode area is effective for discharge reactions.

The inventive method leads to the formation of high quality gasoline, i.e. a mixture of normally liquid hydrocarbons having a high octane number due to large amounts of branched hydrocarbons, as well as to aromatics and oxygenates. Moreover, syngas, i.e. a normally gaseous mixture of carbon monoxide and hydrogen, is also produced as by-product in the inventive method.

Advantageously, the present invention contributes to decrease of emissions of carbon dioxide in the atmosphere due to its incorporation in accordance with the present invention. Thus, the inventive method leads to a better carbon resource utilization.

Although certain preferred embodiments of the invention have been described herein, it will be apparent to those skilled in the art to which the invention pertains that modifications and variations of the described embodiments may be made without departing from the spirit and scope of the invention.

List of Reference Signs

1   high voltage AC generator
2   first electrode means
3   second electrode means
4   dielectric layer, dielectric material
5   catalyst
6   discharge gap

**Claims**

1. A method of upgrading a mixture of normally liquid hydrocarbons having a normal boiling range up to about 180°C into a high octane normally liquid fuel; said method comprising the steps of:

   feeding a composition containing said mixture of normally liquid hydrocarbons into a reactor including a first electrode means, a second electrode means and at least one layer of a normally solid dielectric material positioned between said first and said second electrode means;
   submitting said composition within said reactor in the presence of a normally solid catalyst to a dielectric barrier discharge, wherein said normally solid catalyst is a member selected from the group of zeolites, modified zeolites and zeolite-like materials; and

controlling said dielectric barrier discharge to convert said composition into a product stream containing said high octane normally liquid fuel.

2. The method of claim 1 wherein said composition further contains carbon dioxide.

3. The method of claim 2 wherein said normally liquid hydrocarbons and said carbon dioxide are contained in said composition at a molar ratio of carbon dioxide:mixture of normally liquid hydrocarbons of between about 1:1 to about 1:4, preferably between about 1:2 to about 1:3.

4. The method of claim 1 to 3 comprising the additional step of preheating at least said mixture of normally liquid hydrocarbons prior to its feeding to a temperature of up to about 180°C.

5. The method of any of claims 1 to 4 wherein said normally solid catalyst has an at least partially crystalline solid structure with at least one 10-ring channel or with at least one 12-ring channel.

6. The method of claim 5 wherein said at least one 10-ring channel has a diameter of between about 4 Å and about 7 Å, or wherein said at least one 12-ring channel has a diameter of between about 4 Å and about 8 Å.

7. The method of any of claims 1 to 6 wherein said solid structure of said normally solid catalyst is free of super cages.

8. The method of any of claims 1 to 7 wherein said normally solid catalyst has a Si/Al ratio of higher than 6, preferably higher than 15.

9. The method of any of claims 1 to 8 wherein said normally solid catalyst is a zeolite or a modified zeolite having a crystalline solid structure selected from BEA, FER, LTL, MEL, MFI, MOR, MTT and ZSM-12.

10. The method of any of claims 1 to 9 wherein said normally solid catalyst comprises at least one substance selected from the group of metal ions and group IA, IIa, IB, IIb and VIII elements of the periodic table.

11. The method of any of claims 1 to 10 wherein said mixture of normally liquid hydrocarbons is naphtha from crude oil distillation or a fraction thereof.

FIG. 1

**European Patent Office**

## EUROPEAN SEARCH REPORT

Application Number

EP 00 81 0498

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 663 914 A (ANGLO IRANIAN OIL CO) 27 December 1951 (1951-12-27) * claims 1-4,6,8 * | 1,11 | C10G35/16 B01J19/08 |
| A | DD 242 007 A (AKAD WISSENSCHAFTEN DDR) 14 January 1987 (1987-01-14) * claims 1,3 * | 1 | |
| A | US 5 576 256 A (GARCIA WOLFGANG ET AL) 19 November 1996 (1996-11-19) * claims 1,11,20,21 * * column 2, line 48 - line 53 * | 1,5,6,8,9 | |

TECHNICAL FIELDS SEARCHED (Int.Cl.7)

C10G
B01J

The present search report has been drawn up for all claims

| Place of search | Date of completion of the search | Examiner |
|---|---|---|
| THE HAGUE | 16 November 2000 | De Herdt, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 81 0498

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2000

| Patent document cited in search report | | Publication date | Patent family member(s) | | Publication date |
|---|---|---|---|---|---|
| GB 663914 | A | | NONE | | |
| DD 242007 | A | 14-01-1987 | NONE | | |
| US 5576256 | A | 19-11-1996 | BR 9502505 | A | 27-02-1996 |
| | | | DE 19518607 | A | 30-11-1995 |
| | | | FR 2720073 | A | 24-11-1995 |
| | | | GB 2289689 | A,B | 29-11-1995 |
| | | | GB 2323094 | A,B | 16-09-1998 |
| | | | JP 2969062 | B | 02-11-1999 |
| | | | JP 8311461 | A | 26-11-1996 |
| | | | NL 1000428 | C | 24-12-1996 |
| | | | NL 1000428 | A | 23-11-1995 |
| | | | US 5591324 | A | 07-01-1997 |
| | | | US 5770047 | A | 23-06-1998 |

EPO FORM P0459

For more details about this annex : see Official Journal of the European Patent Office, No. 12/82